(19) Europäisches Patentamt
European Patent Office
Office européen des brevets

(11) **EP 4 311 840 B1**

(12) **EUROPEAN PATENT SPECIFICATION**

(45) Date of publication and mention
of the grant of the patent:
**23.10.2024   Bulletin 2024/43**

(21) Application number: **23187657.4**

(22) Date of filing: **25.07.2023**

(51) International Patent Classification (IPC):
*C08J 9/00* *(2006.01)*          *C08J 9/18* *(2006.01)*
*C08J 9/232* *(2006.01)*         *B29C 44/34* *(2006.01)*
*C08J 9/12* *(2006.01)*

(52) Cooperative Patent Classification (CPC):
**C08J 9/0071; B29C 44/3461; C08J 9/0019;
C08J 9/0061; C08J 9/0095; C08J 9/18;
C08J 9/232;** C08J 9/122; C08J 2201/03;
C08J 2300/22; C08J 2323/12; C08J 2423/12

(54) **THERMOPLASTIC RESIN EXPANDED BEADS AND THERMOPLASTIC RESIN EXPANDED BEADS MOLDED ARTICLE**

EXPANDIERTE PERLEN AUS THERMOPLASTISCHEM HARZ UND GEFORMTER GEGENSTAND AUS EXPANDIERTEN PERLEN AUS THERMOPLASTISCHEM HARZ

PERLES EXPANSÉES DE RÉSINE THERMOPLASTIQUE ET ARTICLE MOULÉ EN PERLES EXPANSÉES DE RÉSINE THERMOPLASTIQUE

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **29.07.2022   JP 2022122161**

(43) Date of publication of application:
**31.01.2024   Bulletin 2024/05**

(73) Proprietor: **JSP Corporation
Tokyo 100-0005 (JP)**

(72) Inventor: **CHIBA, Takuya
Yokkaichi-shi, 5100881 (JP)**

(74) Representative: **Dehns
St. Bride's House
10 Salisbury Square
London EC4Y 8JD (GB)**

(56) References cited:
**EP-A1- 3 309 196     EP-A1- 3 309 197
EP-A1- 3 498 765**

**Description**

Technical Field

The present invention relates to thermoplastic resin expanded beads and a thermoplastic resin expanded beads molded article, and more particularly to thermoplastic resin expanded beads containing a conductive carbon material and a flame retardant, and a thermoplastic resin expanded beads molded article formed of the same.

Background Art

Thermoplastic resin expanded beads can be molded into various shapes according to applications. A thermoplastic resin expanded beads molded article obtained from the expanded beads by in-mold molding is used in a wide range of applications such as a dielectric, a electromagnetic wave shielding body, a heat insulating material, a packaging material for electronic components, an impact absorbing material, and a reusable box. For example, Patent Literature 1 discloses thermoplastic resin expanded beads containing a functional additive.

On the other hand, for example, when the thermoplastic resin expanded beads molded article is used as electromagnetic wave absorber, it is necessary to add a conductive agent as a functional additive. However, since a conductive agent having high conductivity has a flame supporting property, when a molded article as electromagnetic wave absorber is exposed to a strong electric field, the molded article may generate heat and be ignited. When a large amount of a conductive agent having high conductivity is added in order to ensure higher electromagnetic wave absorption performance, there arises a problem such that the possibility of heat generation and ignition further increases.

In order to solve such a problem, there has been proposed a molded article in which a flame retardant is added to a thermoplastic resin together with a carbon material such as carbon black or graphite that is served as a conductive agent in order to prevent ignition due to heat generation of electromagnetic wave absorber formed of a thermoplastic resin expanded beads molded article (for example, Patent Literature 2).

Citation List

Patent Literature

    Patent Literature 1: WO 2016/199693 A
    Patent Literature 2: JP 4-155899 A

Summary of Invention

Technical Problem

However, as proposed in Patent Literature 2, when a flame retardant is added with a carbon material such as carbon black serving as a conductive agent to form a molded article, there arises a problem such that the conductive agent easily desorbs from a surface of the molded article, so that the desorbed carbon material likely causes contamination, making it difficult to achieve both low contamination and flame retardancy.

The present invention has been made in view of the above-described conventional problem, and an object of the present invention is to provide thermoplastic resin expanded beads capable of providing a thermoplastic resin expanded beads molded article which is excellent in flame retardancy while containing a conductive carbon material and in which contamination due to desorption of the conductive carbon material is suppressed.

Solution to Problem

The present invention provides thermoplastic resin expanded beads described below.

    <1> Thermoplastic resin expanded beads including a conductive carbon material and a flame retardant, wherein each of the thermoplastic resin expanded beads is composed of a cover layer that is in a expanded state and is made of a thermoplastic resin and a core layer that is made of a thermoplastic resin, a mass ratio of the cover layer to the core layer is in a range of 99:1 to 50:50, the conductive carbon material is one or more selected from a carbon nanotube, a carbon nanofiber, a carbon nanostructure, and graphene, a content ($X_i$) of the conductive carbon material in the core layer is 1% by mass or more and 30% by mass or less, a content ($X_o$) of the conductive carbon material in the cover layer is 3% by mass or less (where 0 is included), a content (Yo) of the flame retardant in the cover layer is 5% by mass or more and 25% by mass or less, the content (Xo) of the conductive carbon material in the cover layer is lower than the content (Xi) of the conductive carbon material in the core layer, and a ratio (Yi/Xi) of a content (Yi) of the flame retardant in the core layer to the content (Xi) of the conductive carbon material in the core layer is 0.2 or more.

<2> The thermoplastic resin expanded beads according to <1>, wherein the content (Yo) of the flame retardant in the cover layer is higher than the content (Yi) of the flame retardant in the core layer.

<3> The thermoplastic resin expanded beads according to <1> or <2>, wherein the conductive carbon material is a carbon nanotube.

<4> The thermoplastic resin expanded beads according to any one of <1 > to <3>, wherein an apparent density of the thermoplastic resin expanded beads is in a range of 25 kg/m$^3$ to 150 kg/m$^3$.

<5> The thermoplastic resin expanded beads according to any one of <1 > to <4>, wherein a thermoplastic resin forming the core layer and a thermoplastic resin forming the cover layer are both polyolefin-based resins.

<6> The thermoplastic resin expanded beads according to any one of <1 > to <5>, wherein the cover layer has an average cell diameter of 50 $\mu$m or more and 300 $\mu$m or less.

<7> The thermoplastic resin expanded beads according to any one of <1 > to <6>, wherein the core layer is a core layer in a expanded state, and the core layer has an average cell diameter of 5 $\mu$m or more and less than 50 $\mu$m.

<8> The thermoplastic resin expanded beads according to any one of <1 > to <7>, wherein a mass ratio of the cover layer to the core layer is in a range of 99:1 to 80:20.

<9> A thermoplastic resin expanded beads molded article obtained by in-mold molding of the expanded beads according to any one of <1> to <8>.

Advantageous Effects of Invention

According to the thermoplastic resin expanded beads of the present invention, it is possible to provide thermoplastic resin expanded beads capable of providing a thermoplastic resin expanded beads molded article which is excellent in flame retardancy while containing a conductive carbon material and in which contamination due to desorption of the conductive carbon material is suppressed.

Brief Description of Drawings

Fig. 1 is a schematic perspective view schematically showing one embodiment of thermoplastic resin expanded beads according to the present invention.
Fig. 2 is a schematic explanatory view showing a method for measuring an apparent density of a core layer and a cover layer in one of the thermoplastic resin expanded beads.

Description of Embodiments

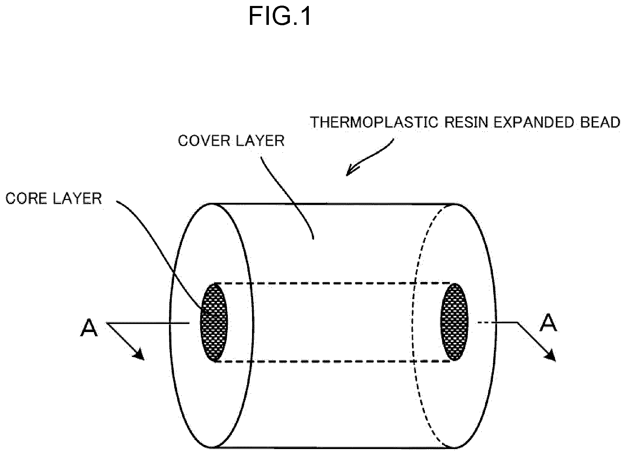

The following will describe the expanded beads of the present invention in more detail with reference to embodiments for carrying out the invention. Fig. 1 is a schematic perspective view schematically showing one embodiment of thermoplastic resin expanded beads of the present invention.

[Thermoplastic Resin Expanded Beads]

Each of thermoplastic resin expanded beads (hereinafter, also simply referred to as expanded beads) of the present embodiment includes a core layer formed of a thermoplastic resin and a cover layer in a expanded state formed of a thermoplastic resin.

(Core Layer)

The core layer in each of the expanded beads of the present invention is formed of a thermoplastic resin, and contains a conductive carbon material and a flame retardant as essential components.

(Cover Layer)

The cover layer in each of the expanded beads of the present invention is a expanded layer formed so as to cover the outer periphery of the core layer, and the expanded structure forming the cover layer has cells formed by foaming a thermoplastic resin. Conventionally, in a case where a large amount of a conductive carbon material is contained in expanded beads to exhibit electromagnetic wave absorption performance, when the expanded beads are molded in a mold to form a expanded beads molded article, it is likely that the fusion rate and the secondary foaming property of the expanded beads molded article are deteriorated, or dimensional stability and appearance of the expanded beads molded article are deteriorated. On the other hand, in order to improve the fusibility, it is necessary to perform an operation such as increasing the molding pressure or pressurizing the expanded beads in advance when molding the expanded beads. However, when the molding pressure is increased, the shrinkage rate of the molded article is high, dimensional stability and appearance of the molded article are easily deteriorated, and in order to pressurize the expanded beads at a high pressure, a long-time pressurization step is required, which remains as a problem from the viewpoint of productivity.

On the contrary, the present invention requires that each of the expanded beads includes the core layer and the cover layer, each layer has a specific mass ratio, the core layer contains a conductive carbon material, and the content of the conductive carbon material in the cover layer is set to be lower than that in the core layer. The foaming of the cover layer suppresses the secondary foaming property of the expanded beads. Furthermore, since the cover layer of each of the expanded beads can be secondarily expanded during in-mold molding, the expanded beads can be sufficiently fused with each other to form a favorable expanded beads molded article. Therefore, the thermoplastic resin expanded beads molded article (hereinafter, also simply referred to as expanded beads molded article) obtained from the expanded beads of the present invention can be a expanded beads molded article having an excellent secondary foaming property and a small shrinkage rate without lowering the fusion rate, irrespective of the blending of the conductive carbon material.

In the embodiment shown in Fig. 1, the two-layered expanded bead including the core layer and the cover layer are exemplified, but other layers may be further provided to form multilayers as long as the effect of the present invention is not impaired.

(Thermoplastic Resin)

In the expanded beads of the present invention, examples of the thermoplastic resin that forms the core layer and the cover layer include polyolefin-based resins such as polyethylene-based resins and polypropylene-based resins, polystyrene-based resins, polycarbonate resins, polyvinyl chloride resins, polymethacrylic-based resins, acrylonitrile-based resins, polyester-based resins, polyamide-based resins, thermoplastic polyurethane resins, and blend polymers thereof. Among these, polyolefin-based resins can be suitably used.

When a mixed resin of a polyolefin-based resin and another resin is used, the polyolefin-based resin is contained in an amount of preferably 50% by mass or more, more preferably 70% by mass or more, still more preferably 90% by mass or more, even more preferably 95% by mass or more.

Examples of the polyethylene-based resin include low-density polyethylene, high-density polyethylene, linear low-density polyethylene, ultra-low-density polyethylene, an ethylene-vinyl acetate copolymer, an ethylene-methyl methacrylate copolymer, an ethylene-methacrylic acid copolymer, and an ionomer-based resin obtained by crosslinking molecules thereof with a metal ion.

Examples of the polypropylene-based resin include a propylene homopolymer and a propylene-based copolymer having 50% by mass or more of a structural unit derived from propylene, and examples of the copolymer include copolymers of propylene and ethylene or an $\alpha$-olefin having 4 or more carbon atoms such as an ethylene-propylene copolymer, a propylene-butene copolymer, and a propylene-ethylene-butene copolymer, a propylene-acrylic acid copolymer, and a propylene-maleic anhydride copolymer. These copolymers may be any of a block copolymer, a random copolymer, and a graft copolymer.

It is preferable to use a non-crosslinked thermoplastic resin in that the non-crosslinked thermoplastic is easy to form a homogeneous mixture with the conductive carbon material to be described later. The thermoplastic resins used in the core layer and the cover layer may be the same or different, but it is preferable that both the thermoplastic resins used in the core layer and the cover layer are polyolefin-based resins.

(Conductive Carbon Material)

The conductive carbon material used in the present invention is one or more selected from a carbon nanotube, a carbon nanofiber, a carbon nanostructure, and graphene, and among them, a carbon nanotube can be suitably used. The conductive carbon material is preferably a conductive agent having high conductivity and electromagnetic wave absorbing performance. The shape of the conductive carbon material is not particularly limited, and examples thereof include a sheet-like shape, a fibrous shape, a net-like shape, and the like formed of the material. The use of the conductive carbon material having the above-mentioned shape leads to an anchoring effect on the thermoplastic resin and entanglement of the conductive agent itself, resulting in difficulty in desorption and thus making it possible to suppress product contamination to a low level.

Among the conductive carbon materials, the carbon nanotube is preferable due to its excellent handleability. The carbon nanotube in use may be a single-walled carbon nanotube or a multi-walled carbon nanotube. The carbon nanotube may contain both the single-walled carbon nanotube and the multi-walled carbon nanotube. From the viewpoint of handleability and cost, the multi-walled carbon nanotube is preferable. An average outer diameter of the carbon nanotube is preferably 5 nm or more and 25 nm or less, and more preferably 7 nm or more and 15 nm or less. An aspect ratio of the carbon nanotube is preferably 50 or more and 500 or less, and more preferably 100 or more and 200 or less. The aspect ratio is determined by dividing the average length of the carbon nanotube by the average diameter. When the size of the carbon nanotube is in the above range, the properties of each expanded beads become uniform due to excellent dispersibility in the resin, and the performance such as electrostatic capacitance can be stabilized. In addition, the conductive carbon material used in the present invention can exhibit excellent electromagnetic wave absorption performance when added in a small amount as compared with the conductive carbon black. Therefore, for example, when a expanded beads molded article obtained by in-mold molding of the expanded beads of the present invention is used as electromagnetic wave absorber, both excellent electromagnetic wave absorption performance and excellent flame retardancy can be achieved.

An average diameter of the carbon nanotube can be measured, for example, by the following method. First, one of the expanded beads is roughly bisected along the A-A cross section shown in Fig. 1, and the cut surface is photographed with a scanning electron microscope to obtain a cut surface image of the expanded bead. The diameters of the carbon nanotube present in the cut surface image are measured at 50 points randomly selected. Then, an average value of the obtained diameters can be taken as the average diameter.

An average length of the carbon nanotube can be measured, for example, by the following method. First, as in the measurement of the average diameter of the carbon nanotube, the cut surface image of the expanded bead is acquired by a scanning electron microscope. Fifty carbon nanotubes are randomly selected from the acquired the cut surface image, and the length of each carbon nanotube is measured based on image analysis. When the carbon nanotube is not linear but has a bent shape, the length along the shape of the carbon nanotube may be measured using a curvimeter or the like. An average value of the lengths thus obtained may be taken as the average length.

(Content of Conductive Carbon Material in Core Layer)

The content ($X_i$) of the conductive carbon material in the core layer is 1% by mass or more and 30% by mass or less. From the viewpoint of balancing exhibiting excellent electrostatic capacitance and low contamination, the content is preferably 2% by mass or more and 25% by mass or less, more preferably 5% by mass or more and 20% by mass or less, and still more preferably 10% by mass or more and 15% by mass or less.

(Content of Conductive Carbon Material in Cover Layer)

The content ($X_o$) of the conductive carbon material in the cover layer is 3% by mass or less (where 0 is included). From the viewpoint of improving the foaming property of the cover layer, the content is preferably 2% by mass or less, more preferably 1% by mass or less, and still more preferably 0.5% by mass or less. The cover layer may contain no conductive carbon material. In the present invention, the content ($X_o$) of the conductive carbon material in the cover layer is required to be smaller than the content ($X_i$) of the conductive carbon material in the core layer.

(Flame Retardant and Flame Retardant Aid)

The flame retardant used in the expanded beads of the present invention is preferably a halogen-based flame retardant such as a bromine-based flame retardant or a chlorine-based flame retardant because it exhibits high flame retardancy. Among them, the bromine-based flame retardant can be suitably used because high flame retardancy is easily obtainable by adding a small amount of the bromine-based flame retardant.

Examples of the bromine-based flame retardant include brominated epoxy resins obtained by adding bromine to epoxy resins, brominated aromatic compounds such as hexabromobenzene, pentabromotoluene, ethylene-bispentabromodiphenyl, decabromodiphenyloxide, 2,3-dibromopropyl pentabromophenyl oxide, polybromophenyl indane, polypentabromobenzyl acrylate, brominated styrene-butadiene-styrene, brominated polyphenylene ether, brominated polystyrene, or derivatives thereof, bromine and nitrogen atom-containing compounds such as ethylenebis(tetrabromophthalic acid) imide, tris(tribromophenoxy) triazine, and tris(2,3-dibromopropyl) isocyanurate, halogenated aliphatic compounds such as tetrabromocyclooctane, brominated bisphenol A such as tetrabromobisphenol A, and tetrabromobisphenol A bis(2-bromoethyl) ether, tetrabromobisphenol A diallyl ether, and derivatives thereof, brominated bisphenol S such as tetrabromobisphenol S and tetrabromobisphenol S(2-bromoethyl) ether, and derivatives thereof, brominated bisphenol derivative oligomers such as tetrabromobisphenol A polycarbonate oligomer and tetrabromobisphenol epoxy oligomer, halogen-containing phosphorus compounds such as tris(tribromoneopentyl) phosphate and tris(bromophenyl) phosphate.

Particularly, tetrabromobisphenol A bis(2,3-dibromopropyl ether) and bis[3,5-dibromo-4-(2,3-dibromopropoxy) phenyl] sulfone are preferable because they exhibit high flame retardancy when added in a small amount.

From the viewpoint of obtaining excellent flame retardancy by adding a small amount, the bromine content in the bromine-based flame retardant is preferably 60% by mass or more, and more preferably 63% by mass or more. The bromine content can be determined according to JIS K7392:2009.

The flame retardant preferably has a 5% decomposition temperature in a range of 260°C to 340°C inclusive. It is found that when the 5% decomposition temperature of the flame retardant is in the above range, a sufficient flame retardant effect by the bromine-based flame retardant can be exhibited in a temperature range in which thermal decomposition of a resin proceeds. From the same viewpoint, the 5% decomposition temperature of the flame retardant is preferably in a range of 270°C to 320°C inclusive, and more preferably in a range of 285°C to 305°C inclusive. The 5% decomposition temperature of the flame retardant may be measured by a thermogravimetric/differential thermal analyzer (TG/DTA). Specifically, a differential loss curve is measured under measurement conditions of a temperature raising rate of 10°C/min, a measurement temperature range from 40°C to 500°C, a nitrogen atmosphere, a material of the sample pan being Pt, and a sample mass of 10 mg, and a temperature when a weight is decreased by 5% in the differential loss curve can be defined as the 5% decomposition temperature.

In the present invention, a flame retardant aid may be added together with the flame retardant. Examples of the flame retardant aid include metal hydroxide, a silicone compound, Teflon, montmorillonite, a metal oxide, a triandine compound, and a guanidine compound. Among them, a metal oxide capable of obtaining a synergistic effect in combination with a bromine-based flame retardant may be suitably used.

Examples of the metal oxide include zinc borate, zinc stannate, antimony trioxide, and antimony pentoxide. Among them, antimony trioxide and zinc stannate may be suitably used because they exhibit a sufficient effect when added in a small amount.

(Content of Flame Retardant and Flame Retardant Aid in Core Layer)

The content (Yi) of the flame retardant in the core layer is preferably 1% by mass or more and 15% by mass or less, more preferably 2% by mass or more and 12% by mass or less, still more preferably 3% by mass or more and 10% by mass or less, and even more preferably 4% by mass or more and 8% by mass or less.

The content of the flame retardant aid in the core layer is preferably 0.5% by mass or more and 8% by mass or less, more preferably 1% by mass or more and 6% by mass or less, still more preferably 1.5% by mass or more and 5% by mass or less, and even more preferably 2% by mass or more and 4% by mass or less. Setting the contents of the flame retardant and the flame retardant aid within the above ranges makes it possible to impart high flame retardancy while imparting high functionality to the expanded beads.

(Content of Flame Retardant and Flame Retardant Aid in Cover Layer)

The content (Yo) of the flame retardant in the cover layer is in a range of 5% by mass or more and 25% by mass or less. From the viewpoint of balancing imparting high flame retardancy and the secondary foaming property, the content (Yo) of the flame retardant in the cover layer is preferably 6% by mass or more and 20% by mass or less, more preferably 6.5% by mass or more and 15% by mass or less, and still more preferably 7% by mass or more and 12% by mass or less.

From the viewpoint of balancing imparting high flame retardancy and the secondary foaming property, the content of the flame retardant aid in the cover layer is preferably 2.5% by mass or more and 10% by weight or less, more preferably 3% by mass or more and 7.5% by weight or less, and still more preferably 3.5% by mass or more and 6% by weight or less.

The content (Yo) of the flame retardant in the cover layer is preferably larger than the content (Yi) of the flame retardant in the core layer. Satisfying the relation with respect to the content of the flame retardant is preferable because excellent flame retardancy can be easily secured.

(Other Additives, etc.)

Additives may be blended in the cover layer and the core layer of the thermoplastic resin expanded beads of the present invention as necessary. Examples of these additives include an antioxidant, an ultraviolet inhibitor, a pigment, a dye, a nucleating agent, a lubricant, and an affinity agent. The additives can be used as long as the effect of the present invention is not impaired, and the additive amounts thereof are preferably 5 parts by mass or less, and more preferably 3 parts by mass or less, with respect to 100 parts by mass of the thermoplastic resin constituting each layer.

(Mass Ratio of Core Layer and Cover Layer)

In the thermoplastic resin expanded beads of the present invention, the mass ratio of the cover layer: the core layer is in a range of 99:1 to 50:50 inclusive. Setting the mass ratio of the cover layer and the core layer within the above range makes it possible to reliably cover the core layer containing a large amount of the conductive carbon material with the cover layer, foam the cover layer, and secure the secondary foaming property, so that the expanded beads excellent in fusibility during molding and dimensional stability of a molded article can be obtained while increasing the amount of the conductive carbon material. From such a viewpoint, the ratio is preferably in a range of 99:1 to 60:40 inclusive, more preferably in a range of 99:1 to 80:20 inclusive, and still more preferably in a range of 95:5 to 90:10 inclusive. The mass in the mass ratio is a mass including the thermoplastic resin and the conductive carbon material contained in the thermoplastic resin.

In the expanded beads of the present invention, the core layer may be completely covered by the cover layer, or a part of the core layer may be exposed. Examples of the structure in which the core layer is exposed include a structure in which only the side surface of the cylindrical core layer is covered by the cover layer, and the upper surface and/or the bottom surface of the cylindrical core layer is exposed.

[Function of Thermoplastic Resin Expanded Beads]

In the thermoplastic resin expanded beads of the present invention, the conductive carbon material and the flame retardant are contained in the core layer, and the ratio $(Yi/Xi)$ of the content $(Yi)$ of the flame retardant in the core layer to the content $(Xi)$ of the conductive carbon material in the core layer is 0.2 or more. Setting the blending ratio $(Yi/Xi)$ of the content $(Xi)$ of the conductive carbon material and the content $(Yi)$ of the flame retardant in the core layer to the above condition makes it possible to impart flame retardancy while containing the conductive carbon material. From such a viewpoint, the blending ratio $(Yi/Xi)$ is preferably 0.3 or more and 10 or less, and more preferably 0.4 or more and 5 or less.

The expanded beads of the present invention may have not only the core layer and the cover layer, but also an outermost layer or another layer formed between the core layer and the cover layer, if necessary, as long as the effect of the present invention is not impaired.

According to the expanded beads of the present invention satisfying the above conditions, the secondary foaming property of the thermoplastic resin expanded beads is not inhibited even when a large amount of the conductive carbon material and the flame retardant are contained in the entire expanded beads, and the fusibility of the expanded beads molded article can be maintained. Therefore, when the expanded beads are molded, it is possible to obtain a expanded beads molded article which contains a large amount of the conductive carbon material and the flame retardant, has a high fusion rate, is excellent in the secondary foaming property, and has suppressed shrinkage, without performing an operation such as increasing the molding pressure or pressurizing the expanded beads in advance. Also for the thermoplastic resin expanded beads molded article formed of the thermoplastic resin expanded beads, since the conductive carbon material and the flame retardant can be prepared in various kinds and amounts, a expanded beads molded article provided with various functionalities can be obtained.

[Method for Producing Thermoplastic Resin Expanded Beads]

As the expanded beads of the present invention, for example, resin beads may be produced by the following method. First, two extruders are prepared, a thermoplastic resin composition for forming the core layer is kneaded with one extruder, a thermoplastic resin composition for forming the cover layer is kneaded with the other extruder, and then co-extrusion is performed from a die having a predetermined shape to obtain a sheath-core string-like composite including the core layer and the cover layer cover the core layer. Next, by cutting the string-like composite coextruded with a predetermined mass or size by a cutting machine equipped with a take-up machine, a columnar composite resin bead including the core layer and the cover layer can be obtained.

The expanded beads which are a foam of resin beads may be produced by a conventionally known foaming method such as a conventionally known method for producing extruded expanded beads, a method for releasing foamable resin beads containing a expanding agent from a pressurizable sealed container to foam the same, or a method for heating and softening expandable resin beads containing a expanding agent to expand the same. Among the production methods described above, the expanded beads of the present invention are preferably expanded by dispersing composite resin beads each composed of a core layer and a cover layer in an aqueous medium (usually water) in a pressurizable sealed container (for example, an autoclave), adding a dispersant, press-fitting and pressurizing a required amount of a expanding agent, stirring the mixture under heating for a required time to impregnate the composite resin beads with the expanding agent, and then releasing the content together with the aqueous medium to a region lower than the pressure in the container. The method for releasing the expandable resin beads containing the expanding agent from the sealed container to foam the same is preferable since it is easier to make the average cell diameters of the cover layer and the foaming layer in each of the obtained expanded beads in the preferable range to be described later.

As the expanding agent, a conventionally known organic physical expanding agent or an inorganic physical expanding agent used for expanding the thermoplastic resin may be used. As the organic physical expanding agent, aliphatic hydrocarbons such as propane, butane, pentane, hexane, and heptane, alicyclic hydrocarbons such as cyclobutane and cyclohexane, and the like may be used, and as the inorganic physical foaming agent, air, nitrogen, carbon dioxide, oxygen, argon, water, and the like may be used.

As the dispersant, for example, an inorganic substance hardly soluble in water, such as aluminum oxide, tricalcium phosphate, magnesium pyrophosphate, zinc oxide, kaolin, or mica, a water-soluble polymeric protective colloid agent such as polyvinyl pyrrolidone, polyvinyl alcohol, or methyl cellulose, or the like may be used. An anionic surfactant such as sodium dodecylbenzenesulfonate and sodium alkanesulfonate may be used.

(Apparent Density)

The apparent density of the expanded beads of the present invention is preferably in a range of 25 $kg/m^3$ to 150 $kg/m^3$ inclusive. When the apparent density of the expanded beads is within the above range, excellent lightweight and excellent moldability can be obtained. From such a viewpoint, the apparent density is more preferably in a range of 30 $kg/m^3$ to 125 $kg/m^3$ inclusive, and still more preferably in a range of 35 $kg/m^3$ to 100 $kg/m^3$ inclusive.

The apparent density of the expanded beads can be obtained by preparing a measuring cylinder filled with water at 23°C, immersing an expanded bead group (the weight W [g] of the expanded bead group) in the measuring cylinder using a wire mesh or the like, obtaining the volume V [$cm^3$] of the expanded bead group from the increase in the water level, dividing the weight of the expanded bead group by the volume of the expanded bead group (W/V), and further converting the weight into units of [$kg/m^3$].

(Closed Cell Rate)

The closed cell rate of the expanded beads is preferably 80% or more from the viewpoint of foam moldability. The closed cell rate of the expanded beads is more preferably 85% or more, still more preferably 90% or more. The closed cell rate of the expanded beads is obtained by the following procedure. The expanded beads left in a thermostatic chamber for 10 days or longer is used as a sample for measurement, and the apparent volume Va is accurately measured by a measurement method (water immersion method) for the apparent density of the expanded beads. After the sample for measurement of the apparent volume Va is thoroughly dried, the true volume value Vx of the sample for measurement is measured according to the procedure C described in ASTM-D2856-70 by "air comparative pycnometer 930" manufactured by Beckman-Toshiba, Ltd. or the like. Then, based on these volume values Va and Vx, the closed cell rate is calculated by the following formula, and the average value of five samples (N = 5) is taken as the closed cell rate of the expanded beads.

$$\text{Closed cell rate (\%)} = (Vx - W/\rho) \times 100/(Va - W/\rho)$$

where

Vx: the true volume of the expanded beads measured by the above method, that is, the sum ($cm^3$) of the volume of the resin constituting the expanded beads and the total volume of the closed cell portion in the expanded beads
Va: the apparent volume ($cm^3$) of the expanded beads measured from the increase in water level when the expanded beads are immersed in a measuring cylinder filled with water
W: the weight (g) of the sample for measurement of the expanded beads
$\rho$: the density ($g/cm^3$) of resin constituting the expanded beads.

(Average Cell Diameter of Cover Layer)

In the expanded beads of the present invention, the average cell diameter of the cover layer is preferably 50 $\mu$m or more and 300 $\mu$m or less. From the viewpoint of obtaining an expanded beads molded article having an excellent secondary foaming property and a small shrinkage rate, the average cell diameter of the cover layer is more preferably 55 $\mu$m or more and 250 $\mu$m or less, still more preferably 60 $\mu$m or more and 200 $\mu$m or less, even more preferably 60 $\mu$m or more and 100 $\mu$m or less.

The core layer may be an expanded core layer or a substantially non-expanded core layer. From the viewpoint of easily exhibiting excellent electrostatic capacitance, the core layer is preferably an expanded core layer. When the core layer is in an expanded state, the average cell diameter of the core layer is preferably smaller than the average cell diameter of the cover layer, more preferably 5 $\mu$m or more and less than 50 $\mu$m, still more preferably 5 $\mu$m or more and 40 $\mu$m or less, and even more preferably 5 $\mu$m or more and 35 $\mu$m or less. When the average cell diameter of the core layer satisfies the above range, excellent electrostatic capacitance is more easily exhibited. A substantially non-expanded core layer includes a core layer with no cells at all (including a core layer in which cells that are formed once during foaming of the expanded beads are melted and destroyed), and also includes a core layer with only a few extremely small cells. When the core layer is in a expanded state, the ratio of the average cell diameter of the cover layer to the average cell diameter of the core layer (average cell diameter of the cover layer/average cell diameter of the core layer) is preferably in a range of 1.5 to 8 inclusive and more preferably in a range of 2 to 5 inclusive.

The average cell diameters of the cover layer and the core layer can be obtained as follows on the basis of an enlarged photograph that is taken under a microscope and that is a cut surface obtained by roughly bisecting one of the expanded beads along the A-A cross section shown in Fig. 1. First, a perpendicular bisector I is drawn with respect to a line segment that takes a shortest distance from the upper end surface to the lower end surface and that passes through the center of the cut surface of the expanded bead in the enlarged photograph of the cut surface of the expanded bead, the length of the line segment I from the left end surface to the right end surface of the expanded bead through which I passes is measured, the length is defined as Lc ($\mu$m), the number Nc (cells) of the cells intersecting the straight line I is obtained, and the value (Lc/Nc) obtained by dividing Ls by N is defined as the average cell diameter of the core layer portion of one expanded bead. A curve passing from the upper end surface to the inner side by 100 $\mu$m is drawn from the right end surface to the left end surface, a length Ls ($\mu$m) thereof and the number Ns of cells intersecting the curve are obtained, and the value (Ls/Ns) obtained by dividing Ls by Ns is defined as the average cell diameter of the cover layer of one expanded bead.

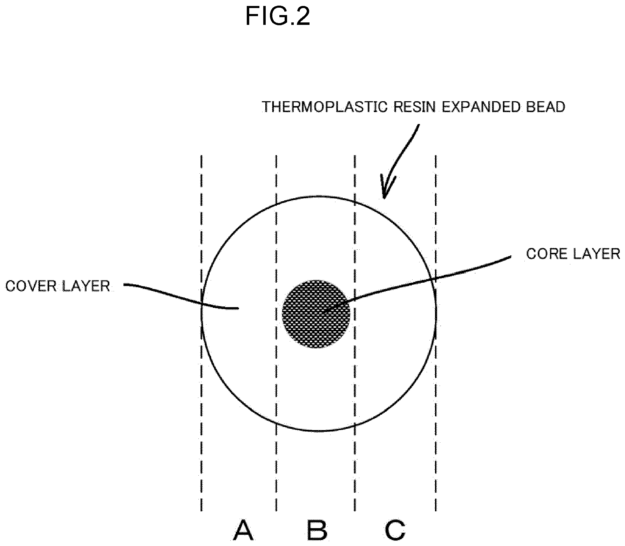

The core layer preferably has a higher density than the cover layer to be described later. Examples of a method for confirming that the core layer has a higher density than the cover layer include the following methods. As shown in Fig. 2, each of twenty or more randomly selected expanded beads are cut into three equal parts A, B and C at equal intervals. Then, A and C are used as expanded bead pieces I, and B is used as a expanded bead piece II, and the apparent density of each is obtained by the same method as used for the apparent density of the expanded beads to be described later. From the results of these apparent densities, an apparent density ratio (expanded bead piece II/expanded bead piece I) is obtained. When the apparent density ratio (expanded bead piece II/expanded bead piece I) is larger than 1, the core layer can be considered to have a higher density than the cover layer. The apparent density ratio (expanded bead piece II/expanded bead piece I) is preferably more than 1.0, more preferably 1.1 or more, and still more preferably 1.2 or more.

(Fusing Heat of High Temperature Peak)

When the expanded beads of the present invention are polyolefin-based resin expanded beads, they preferably have a secondary crystal, and the secondary crystal preferably has a fusing heat of a high temperature peak (high temperature peak heat quantity) in a range of 1 J/g to 30 J/g inclusive as determined by differential thermal analysis. That is, it is preferable that a DSC curve (DSC curve of a first heating) obtained by heating 2 mg to 10 mg of the polyolefin-based resin expanded beads from 23°C to 220°C at a temperature rising rate of 10°C/min by a heat flux differential scanning calorimetry method has an endothermic peak A (intrinsic peak) having a vertex temperature intrinsic to the polyolefin-based resin and one or more endothermic peaks B (high temperature peaks) having a vertex temperature in a temperature region on a high temperature side of the intrinsic peak and derived from the secondary crystal. In addition, the high temperature peak heat quantity is preferably in a range of 1 J/g to 30 J/g inclusive and more preferably in a range of 5 J/g to 20 J/g inclusive. When the high temperature peak heat quantity is within the above range, a expanded beads molded article excellent in molding fusibility may be obtained. The high temperature peak heat quantity corresponds to the area of the high temperature peak, and may be specifically obtained as follows. First, a straight line ($\alpha$-$\beta$) connecting a point $\alpha$ corresponding to 80°C on the DSC curve and a point $\beta$ corresponding to the fusing end temperature T of the expanded beads on the DSC curve is drawn. The fusing end temperature T is a temperature corresponding to the intersection of the DSC curve on the high temperature side of the high temperature peak B and the high temperature side baseline. Next, a straight line parallel to the vertical axis of the graph is drawn from a point $\gamma$ on the DSC curve corresponding to the valley between the intrinsic peak A and the high temperature peak B, and a point intersecting the straight line ($\alpha$-$\beta$) is defined as $\sigma$. The area of the high temperature peak B is the area of a portion surrounded by the curve of the high temperature peak B portion of the DSC curve, the line segment ($\sigma$-$\beta$), and the line segment ($\gamma$-$\sigma$), and this corresponds to the heat quantity of the high temperature peak. The high temperature peak B appears on the DSC curve of the first heating of the expanded beads measured as described above, but does not appear on the DSC curve of a second heating obtained when the DSC curve of the first heating is obtained, then cooled from 200°C to 25°C at a cooling rate of 10°C/min, and heated to 200°C at a temperature rising rate of 10°C/min, and only an endothermic peak similar to the intrinsic peak A appears on the DSC curve of the second heating. Therefore, the intrinsic peak A and the high temperature peak B can be easily distinguished.

It is to be noted that the expanded beads having a high temperature peak on the DSC curve may be expanded by a method in which, in the expanded bead production step, the temperature is not raised to the fusing end temperature (T) or higher of the polyolefin-based resin at the time of heating, the temperature is stopped at an arbitrary temperature (Ta) within a range of a temperature 20°C lower than the fusing point (Tm) of the polyolefin-based resin or more lower and lower than the fusing end temperature (T), and held at the temperature (Ta) for a sufficient time, preferably about 10 to 60 minutes (one-stage holding step), and then the temperature is adjusted to an arbitrary temperature (Tb) within a range from a temperature 15°C lower than the fusing point (Tm) to the fusing end temperature (T) + 10°C, and held at the temperature for a further sufficient time, preferably about 10 to 60 minutes (two-stage holding step), and then the expandable resin beads are released from the inside of the sealed container to a low pressure.

[Thermoplastic Resin Expanded Beads Molded Article]

The expanded beads molded article formed of the expanded beads of the present invention may be molded by in-mold molding using only the expanded beads of the present invention, and may also be molded using the expanded beads of the present invention and other generally known thermoplastic resin expanded beads in combination. The size and shape of the expanded beads molded article are not particularly limited, and various three-dimensional shapes such as a plate shape, a columnar shape, a polygonal pyramid, and a conical shape may be adopted.

[Method for Molding Thermoplastic Resin Expanded Beads Molded Article]

The expanded beads molded article may be produced, for example, using an in-mold molding method. Specifically, first, a mold designed in a desired shape is prepared. Next, the mold is filled with the expanded beads of the present invention, and steam is supplied into the mold to heat the inside of the mold. At this time, the cover layers of the adjacent expanded beads are fused with each other, and the thermoplastic resin expanded beads are secondarily expanded to fill gaps between the expanded beads, so that a large number of the thermoplastic resin expanded beads filled in the mold are integrated. Thereafter, the mold is cooled, and the content is taken out from the inside of the mold to obtain an expanded beads molded article.

(Density of Molded Article)

The density of the expanded beads molded article of the present invention is not particularly limited, but is usually preferably in a range of 9 kg/m$^3$ to 300 kg/m$^3$ inclusive. The density of the molded article may be obtained by dividing the mass of the molded article by the volume of the molded article. The volume of the expanded beads molded article may be obtained from the outer dimension and the like of the molded article.

(Fusion Rate)

In consideration of obtaining the expanded beads molded article excellent in dimensional stability and appearance, it is desirable that the fusion rate of the expanded beads constituting the expanded beads molded article is 70% or more, preferably 80% or more, more preferably 90% or more.

The expanded beads molded article of the present invention preferably has an electrostatic capacitance in a range of 0.12 pF to 0.4 pF inclusive, and more preferably in a range of 0.2 pF to 0.35 pF inclusive. When the electrostatic capacitance of the expanded beads molded article satisfies the above range, excellent electromagnetic wave absorption performance can be expected, and a molded article suitable as electromagnetic wave absorber can be obtained.

Examples

Hereinafter, the present invention will be described in more detail with reference to examples.

A raw material masterbatch (MB) was adjusted using the following raw materials to obtain the thermoplastic resin expanded beads in Examples 1 to 10 shown in Table 5 and Comparative Examples 1 to 5 shown in Table 6.

(Raw Materials)

As raw materials, the following thermoplastic resins, conductive carbon materials, flame retardants, and a flame retardant aid were used. Thermoplastic resin:

Polypropylene-based resin shown in Table 1
Conductive carbon material: Conductive carbon materials shown in Table 2 and Table 3
Flame retardants and flame retardant aid: Flame retardants and flame retardant aid shown in Table 4

[Table 1]

| Thermoplastic resin | Abbreviation | PP1 | PP2 |
|---|---|---|---|
| | Types of resins | Ethylene-propylene random copolymer | Ethylene-propylene random copolymer |
| | Ethylene content (%) | 3.6 | 4.2 |
| | Fusing point (°C) | 136 | 134 |
| | Glass transition temperature (°C) | 3 | 3 |
| | MFR (g/10 min) | 8.2 | 7.2 |

[Table 2]

| Conductive carbon material | Abbreviation | CN1 | CN2 |
|---|---|---|---|
| | Type | Multilayered CNT | Multilayered CNT |
| | Manufacturer | Nanocyl | Alkema |
| | Product name | NC7000 | C100 |
| | Average length ($\mu$m) | 1.5 | 1.0 |
| | Average outer diameter (nm) | 9.5 | 12 |
| | Aspect ratio | 158 | 83 |

[Table 3]

| Conductive carbon material | Abbreviation | CB1 |
|---|---|---|
| | Type | Oil-furnace black |
| | Product name | Ketjen black EC300J |
| | DBP absorption amount ($cm^3$/100g) | 360 |
| | Bead diameter (nm) | 40 |

[Table 4]

| Flame retardant, flame retardant aid | Type | Bromine-based flame retardant | Bromine-based flame retardant | Flame retardant aid |
|---|---|---|---|---|
| | Bromine content | 68% by mass | 66% by mass | - |
| | 5% decomposition temperature | 290°C | 300°C | - |
| | Abbreviation | FR1 | FR2 | ATO |
| | Composition | Tetrabromobisphenol A bis (2,3-dibromopropyl ether) | Bis[3,5-dibromo-4-(2,3-dibromopropoxy) phenyl] sulfone | Antimony trioxide |
| | Product name | FR-720 | FCP-65CN | PATOX-M |
| | Manufacturer | ICL-IP JAPAN | SUZUHIRO CHEMICAL CO., LTD. | Nihon Seiko Co., Ltd. |

[Preparation of Raw Material Masterbatch (MB)]

Each of the polypropylene-based resin shown in Table 1, the conductive carbon materials shown in Table 2 and Table 3, the flame retardants and the flame retardant aid shown in Table 4 was fed to a twin screw extruder having an inner diameter of 20 mm at a blending ratio shown in Table 5 and Table 6 below, melt-kneaded at a temperature in a range of 150°C to 190°C inclusive to be extruded into strands, and the strands were cooled and cut to obtain the masterbatches for forming the core layer and the cover layer in Examples 1 to 10 and Comparative Examples 1, 2, 4 and 5 and the masterbatch for forming the core layer in Comparative Example 3.

[Production of Thermoplastic Resin Beads (Resin Beads)]

(Example 1)

Using an extruder in which a die for forming a multilayer strand is attached to the outlet sides of a single-layer extruder for a resin bead core layer having an inner diameter of 25 mm and a twin-screw extruder for a resin bead cover layer having an inner diameter of 26 mm, the masterbatch for forming the core layer was supplied to the extruder for a resin bead core layer having an inner diameter of 25 mm and simultaneously the masterbatch for forming the cover layer was supplied to the extruder for a resin bead cover layer having an inner diameter of 26 mm in a manner of having the formulation shown in Table 5, and each was heated, melted, and kneaded at a set temperature in a range of 190°C to 210°C inclusive, and then supplied to the die. They were merged in the die and co-extruded as a multilayer strand in which a side surface of the core layer was covered by the cover layer from a fine hole of the spinneret attached to a tip of the extruder. Next, the co-extruded strand was cooled with water, and cut with a pelletizer so as to have 2 mg and LID = 2.4 to obtain cylindrical resin beads formed into two layers (sheath core structure) as described in Table 5. Zinc borate as a cell adjusting agent was supplied to the cover layer so as to have a content of 1000 ppm by mass. The mass ratio of the core layer to the cover layer was set to 7:93.

[Production of Thermoplastic Resin Expanded Beads (Expanded Beads)]

1 kg of the resin beads were charged into a 5 L autoclave together with 3 L of water as a dispersion medium, 3 g of kaolin as a dispersant, 0.04 g of sodium alkylbenzene sulfonate as a dispersion aid, and 0.1 g of aluminum sulfate were each added to the dispersion medium, carbon dioxide as a expanding agent was press-fitted into a sealed container so as to have the pressure in the sealed container shown in Table 5, the temperature was heated to the expanding temperature under stirring and held at the same temperature for 15 minutes to adjust the high temperature peak heat quantity, and then the contents of the autoclave were released together with water under atmospheric pressure to obtain the expanded beads.

[Production of Thermoplastic Resin Expanded Beads Molded Article]

The expanded beads obtained above were filled in a cavity of a flat plate mold having a length of 250 mm (long side) $\times$ a width of 200 mm $\times$ a thickness of 50 mm, and in-mold molding was performed by steam heating to obtain a plate-shaped expanded molded article. In the heating method, steam was supplied for 5 seconds in a state where drain valves on both sides of the mold were opened to perform preheating (exhaust step), then unidirectional heating was performed at a pressure lower than the main heating pressure by 0.04 MPa (G), further unidirectional heating was performed from the opposite direction at a pressure lower than the main heating pressure by 0.02 MPa (G), and then heating was performed at a molding heating steam pressure (molding pressure) shown in Table 5. Note that (G) means a gauge pressure.

The molding pressure is the lowest pressure at which the molded article with excellent appearance and without large shrinkage can be obtained. After completion of the heating, the pressure was released, and the molded article was cooled with water until the surface pressure by the foaming force of the molded article reaches 0.04 MPa (G), then the mold was opened, and the molded article was taken out from the mold. The obtained molded article was cured in an oven at 80°C for 12 hours to obtain the expanded beads molded article. The physical properties of the obtained expanded beads molded article are shown in Table 5.

(Examples 2 to 10)

Resin beads, expanded beads, and a expanded beads molded article were obtained in the same manner as done in Example 1 except that the production conditions were the conditions shown in Table 5.

(Comparative Examples 1 to 5)

In Comparative Examples 1, 2, 4, and 5, resin beads, expanded beads, and an expanded beads molded article were obtained in the same manner as done in Example 1 except that the production conditions were the conditions shown in Table 6. In Comparative Example 3, only the masterbatch for forming the core layer was produced so as to have the formulation shown in Table 6, supplied to the extruder for a resin bead core layer having an inner diameter of 25 mm, heated, melted, and kneaded at a set temperature in a range of 190°C to 210°C inclusive, and then extruded as a single layer strand from the fine hole of the spinneret attached to the tip of the extruder. Next, the single-layer strand is cooled with water and cut with a pelletizer so as to have 2 mg and L/D=2.4 to obtain cylindrical resin beads formed in a single layer as described in Table 6. Thereafter, an expanded beads molded article was obtained in the same procedure as used in Example 1.

In Tables 5 and 6, the cover layer/core layer (mass ratio) is the mass ratio (%) of each of the cover layer and the core layer in the total mass of the beads. In addition, the extrusion processability of each resin bead was evaluated according to the following criteria. The results are shown in Tables 5 and 6. good: Surging does not occur at the time of extrusion (there is no subtle discharge variation for each strand), and the thickness of the strand is always constant. poor: Slight surging occurs at the time of extrusion (there is slight discharge variation for each strand), and the thickness of the strand slightly changes.

The physical properties of the expanded beads and the expanded beads molded article of Examples 1 to 10 and Comparative Examples 1 to 5 were measured and evaluated by the following methods. The results are shown in Tables 5 and 6.

(Apparent Density of Expanded Beads)

The apparent density of the expanded beads was obtained by the following procedure. The apparent density of the expanded beads was obtained by preparing a measuring cylinder filled with water at 23°C, immersing an expanded bead group (the weight W [g] of the expanded bead group) in the measuring cylinder using a wire mesh or the like, obtaining the volume V [cm$^3$] of the expanded bead group from the increase in the water level, dividing the weight of the expanded bead group by the volume of the expanded bead group (W/V), and further converting the weight into units of [kg/m$^3$].

(Apparent Density Ratio)

The apparent density ratio was measured by the following method. As shown in Fig. 2, each of twenty randomly selected expanded beads was cut into three equal parts A, B and C at equal intervals. Then, A and C were used as expanded bead pieces I, and B was used as an expanded bead piece II, and the apparent density of each was obtained by the same method as used for the apparent density of the expanded beads. From the results of these apparent densities, the apparent density ratio (expanded bead piece II/expanded bead piece I) was obtained.

(Closed Cell Rate of Expanded Beads)

The closed cell rate of the expanded beads was measured by the following procedure. The expanded beads having a bulk volume of about 20 cm$^3$ left in a thermostatic chamber for 10 days was used as a sample for measurement, and the apparent volume Va was accurately measured by a measurement method (water immersion method) for the apparent density of the expanded beads. After the sample for measurement of the apparent volume Va was thoroughly dried, the true volume value Vx of the sample for measurement was measured according to the procedure C described in ASTM-D2856-70, as measured by "air comparative pycnometer 930" manufactured by Beckman-Toshiba, Ltd.. Then, based on this volume values Va and Vx, the closed cell rate was calculated by the following formula, and the average value of five samples (N = 5) was taken as the closed cell rate of the expanded beads.

$$\text{Closed cell rate (\%)} = (Vx - W/\rho) \times 100/(Va - W/\rho)$$

where

Vx: the true volume of the expanded beads measured by the above method, that is, the sum (cm$^3$) of the volume of the resin constituting the expanded beads and the total volume of the closed cell portion in the expanded beads
Va: the apparent volume (cm$^3$) of the expanded beads measured from the increase in water level when the expanded beads are immersed in a measuring cylinder filled with water
W: the weight (g) of the sample for measurement of the expanded beads
$\rho$: the density (g/cm$^3$) of resin constituting the expanded beads.

(Average Cell Diameters of Cover Layer and Core Layer)

The average cell diameters of the cover layer and the core layer were measured by the following procedure. The expanded beads were obtained as follows on the basis of an enlarged microscopic photograph of a cut surface obtained by roughly bisecting one of the expanded beads along the A-A cross section shown in Fig. 1. First, a perpendicular bisector I was drawn with respect to a line segment taking a shortest distance from the upper end surface to the lower end surface and passing through the center of the cut surface of the expanded bead in the enlarged photograph of the cut surface of the expanded bead, the length of the line segment I from the left end surface to the right end surface of the expanded bead through which I passes was measured, with the length defined as Lc ($\mu$m), the number Nc (cells) of the cells intersecting the straight line I was obtained, and the value (Lc/Nc) obtained by dividing Ls by N was defined as the average cell diameter of the core layer portion of one expanded bead.
A curve passing from the upper end surface to the inner side by 100 $\mu$m was drawn from the right end surface to the left end surface, a length Ls ($\mu$m) thereof and the number Ns of cells intersecting the curve were obtained, and the value (Ls/Ns) obtained by dividing Ls by Ns was defined as the average cell diameter of the cover layer of one expanded bead. This operation was performed on ten expanded beads, and a value obtained by arithmetically averaging the average cell diameters of the core layer and the cover layer of each expanded bead was taken as the average cell diameters of the core layer and the cover layer of the expanded beads. In Comparative Example 3, only the average cell diameter of the core layer was obtained.

(High Temperature Peak Heat Quantity of Expanded Beads)

The heat quantity of the high temperature peak of the expanded beads was measured by the following procedure. In the DSC curve (DSC curve of the first heating) obtained by heating 1 mg to 3 mg of the expanded beads from 25°C to 200°C at the temperature rising rate of 10°C/min by a heat flux differential scanning calorimeter, the endothermic peak A (intrinsic peak) having a vertex temperature intrinsic to the thermoplastic resin and one or more of the endothermic peaks B (high temperature peak) having a vertex temperature in a temperature region on a high temperature side of the intrinsic peak appeared. The high temperature peak heat quantity was calculated by the method described in the description. The average value of five randomly selected samples (N = 5) was taken as the high temperature peak heat quantity of the expanded beads.

(Fusion Rate of Expanded Beads Molded Article)

The fusion rate was measured based on the percentage (fusion rate) of the number of the expanded beads materially cracked out of the expanded beads exposed on the cracked surface of a cracked expanded beads molded article. Specifically, a test piece was cut out from the expanded beads molded article, a cut of about 5 mm was made in each test piece with a cutter knife, and then the expanded beads molded article was cracked from the cut portion. Next, the number (n) of the expanded beads present on the cracked surface of the expanded beads molded article and the number (b) of the expanded beads materially cracked were measured, and the ratio (b/n) of (b) to (n) was expressed as a percentage and taken as the fusion rate (%).

(Density of Expanded Beads Molded Article)

The density of the expanded beads molded article (molded article density) was obtained by dividing the mass (kg) of the molded article by the volume ($m^3$) obtained from the outer dimension of the molded article.

(Shrinkage Rate)

The shrinkage rate [%] of the expanded beads molded article was obtained by (250 [mm] - long side length of molded article [mm])/250 [mm] $\times$ 100. The "250 [mm]" is the long side dimension of the mold for molding, and the "long side length of the molded article [mm]" is a value obtained by measuring the length of the long side of the expanded beads molded article obtained in the examples and the comparative examples by curing the expanded beads molded article for 12 hours in an atmosphere of 80°C, then cooling it slowly, and curing it for another 6 hours in an atmosphere of 23°C.

(Secondary Foaming Property)

The secondary foaming property of the molded article was evaluated as follows. good: Gaps among the expanded beads on a surface of the molded article are completely filled.

poor: Gaps among the expanded beads on a surface of the molded article are slightly observed.
bad: Gaps among the expanded beads on a surface of the molded article is not clearly filled.

(Flame Retardancy)

A rectangular parallelepiped test piece having a length of 150 mm $\times$ a width of 50 mm $\times$ a thickness of 13 mm was cut out as a test piece for an HBF test of flame retardant standard UL94 from substantially the center in the thickness direction of the expanded beads molded article (produced with a molded skin layer left on one surface having a length of 150 mm $\times$ a width of 50 mm). Using the obtained test piece, the HBF test of flame retardant standard UL94 was performed with the molded skin layer faced downward, and flame retardancy was evaluated according to the following evaluation criteria.

good: All of the five test pieces satisfy a combustion rate of 40 mm/min or slower between marked lines of 100 mm, or a combustion distance of less than 125 mm, or satisfy both.
bad: One or more of the five test pieces satisfies a combustion rate of faster than 40 mm/min between marked lines of 100 mm, or a combustion distance of 125 mm or longer, or satisfy both.

(Electrostatic Capacitance)

The electrostatic capacitance of the expanded beads molded article is measured using an electrostatic capacitance measuring device CM113N manufactured by YAMAMOTO ELECTRIC INSTRUMENT CO.,LTD.. As the probe (A1407-8065), one having a detection electrode diameter of 98 mm, a guard electrode outer diameter of 150 mm, an inner diameter of 100 mm, an electrode width of 50 mm, and an insulation distance between electrodes of 2 mm was used. First, a metal plate serving as a counter electrode was placed on a horizontal plane, and a polypropylene-based resin expanded beads molded article having a molded article density of 30 kg/$m^3$ and a size of a length of 300 mm $\times$ a width of 300 mm $\times$ a thickness of 200 mm and containing no conductive agent was placed as a blank on the metal plate, and the measurement probe was placed on the polypropylene-based resin expanded beads molded article so as to have no gap between the polypropylene-based resin expanded beads molded article and the guard electrode of the measurement probe. After the placement, the electrostatic capacitance was measured to adjust the origin. Thereafter, the measurement probe was placed on each expanded beads molded article (a length of 250 mm $\times$ a width of 200 mm $\times$ a thickness of 50 mm) obtained in the examples and the comparative examples, and the electrostatic capacitance of the expanded beads molded article was measured.

(Contaminability)

The contaminability of the expanded beads molded article was evaluated by the degree of contamination to a cloth. A test method for contaminating the cloth was conducted as follows. An uncolored polypropylene bar (A) having a width of 10 mm × a length of 300 mm × a thickness of 5 mm was fixed on a table. A white cloth having a width of 100 mm × a length of 200 mm (B) made of cotton Kanakin No. 3 was fixed on top of the bar (A). A sample (C) for the test was cut out in a size of 50 mm × 50 mm × 25 mm thick with one side of the 50 mm × 50 mm molded skin layer of the expanded beads molded article left, and was placed on the white cloth (B) with the molded skin layer of the expanded beads molded article surfaced downward, and then a 3 kg weight (D) was placed thereon.

The sample (C) and the weight (D) were fixed with a jig, reciprocated on the white cloth (B), and the contaminabilities to the cloth were compared as L* values. The reciprocating motion was performed under the conditions of an amplitude of 200 mm, a frequency of 4.5 Hz, and a test time of 10 s. With the white cloth (B) and the sample (C) being changed each time, the test was performed five times for each type.

The degree of contamination to the cloth was evaluated as follows. Each of the L* values (L*B) of the white cloth before the contamination test was measured, each of the L* values (L*A) of the contaminated part of the white cloth after the contamination test was measured for each sample obtained in the five tests, the value of L*A - L*B (ΔL*) was obtained, and the value obtained by arithmetically averaging each ΔL* was taken as the degree of contamination. The L* value was measured using a spectrophotometer/color difference meter (CM-5 manufactured by KONICA MINOLTA JAPAN, INC.) under the conditions of a measurement unit mesh size: φ 8 mm, a measurement method: reflection measurement, and an SCE method.

[Table 5]

| Table 5 | | | | Example 1 | Example 2 | Example 3 | Example 4 | Example 5 | Example 6 | Example 7 | Example 8 | Example 9 | Example 10 |
|---|---|---|---|---|---|---|---|---|---|---|---|---|---|
| Resin bead | Core layer | Resin | | PP1 | PP1 | PP1 | PP1 | PP1 | PP1 | PP1 | PP1 | PP1 | PP1 |
| | | % by mass | | 81 | 81 | 81 | 87 | 75 | 81 | 81 | 93 | 81 | 77 |
| | | Conductive carbon material | Type | CN1 | CN1 | CN1 | CN1 | CN1 | CN2 | CN1 | CN1 | CN1 | CN1 |
| | | | % by mass (Xi) | 12 | 12 | 12 | 6 | 18 | 12 | 12 | 3 | 12 | 12 |
| | | Flame retardant | Type | FR1 | FR1 | FR1 | FR1 | FR1 | FR1 | FR1 | FR1 | FR2 | FR1 |
| | | | % by mass (Yi) | 5 | 5 | 5 | 5 | 5 | 5 | 5 | 2.5 | 5 | 7.5 |
| | | Flame retardant aid | Type | ATO | ATO | ATO | ATO | ATO | ATO | ATO | ATO | ATO | ATO |
| | | | % by mass | 2.5 | 2.5 | 2.5 | 2.5 | 2.5 | 2.5 | 2.5 | 1.3 | 2.5 | 3.8 |
| | | Yi/Xi | - | 0.42 | 0.42 | 0.42 | 0.83 | 0.28 | 0.42 | 0.42 | 0.83 | 0.42 | 0.63 |
| | Cover layer | Resin | | PP1 | PP1 | PP1 | PP1 | PP1 | PP1 | PP1 | PP1 | PP1 | PP1 |
| | | % | % by mass | 89 | 89 | 89 | 89 | 89 | 89 | 88 | 89 | 89 | 78 |
| | | Conductive carbon material | Type | - | - | - | - | - | - | CN1 | - | - | - |
| | | | % by mass | 0 | 0 | 0 | 0 | 0 | 0 | 0.5 | 0 | 0 | 0 |
| | | Flame retardant | Type | FR1 | FR1 | FR1 | FR1 | FR1 | FR1 | FR1 | FR1 | FR2 | FR1 |
| | | | % by mass | 7.5 | 7.5 | 7.5 | 7.5 | 7.5 | 7.5 | 7.5 | 7.5 | 7.5 | 15 |
| | | Flame retardant aid | Type | ATO | ATO | ATO | ATO | ATO | ATO | ATO | ATO | ATO | ATO |
| | | | % by mass | 3.8 | 3.8 | 3.8 | 3.8 | 3.8 | 3.8 | 3.8 | 3.8 | 3.8 | 7.5 |

EP 4 311 840 B1

| Table 5 | | | | Example 1 | Example 2 | Example 3 | Example 4 | Example 5 | Example 6 | Example 7 | Example 8 | Example 9 | Example 10 |
|---|---|---|---|---|---|---|---|---|---|---|---|---|---|
| | | | Core laver/Cover layer (mass ratio) | 7193 | 7193 | 7193 | 7193 | 7193 | 7193 | 7193 | 7/93 | 7193 | 7193 |
| | | | Extrusion processability | good | good | good | good | good | good | good | good | good | good |
| Expanded bead | Production conditions | | Holding temperature (°C) | 145.5 | 145.5 | 145.5 | 145.5 | 145.5 | 145.5 | 145.5 | 145.5 | 145.5 | 145.5 |
| | | | Holding time (min) | 15 | 15 | 15 | 15 | 15 | 15 | 15 | 15 | 15 | 15 |
| | | | Pressure in sealed container (MPa(G)) | 3.2 | 2.2 | 2.2 | 3.2 | 3.2 | 3.2 | 3.2 | 3.2 | 3.2 | 3.2 |
| | | | Expanding-temperature (°C) | 145.5 | 145.5 | 145.5 | 145.5 | 145.5 | 145.5 | 145.5 | 145.5 | 145.5 | 145.5 |
| | Physical properties | | Apparent density of expanded beads (kg/m$^3$) | 42 | 83 | 28 | 42 | 42 | 42 | 42 | 42 | 42 | 42 |
| | | | Apparent density of expanded bead-piece I (kg/m$^3$) | 38.7 | 77.5 | 25.8 | 38.7 | 38.7 | 38.7 | 38.7 | 38.7 | 38.7 | 38.7 |
| | | | Apparent density of expanded bead piece II (kg/m$^3$) | 45.4 | 90.7 | 30.2 | 41.8 | 49.0 | 45.4 | 45.4 | 40.0 | 45.4 | 45.4 |
| | | | Density ratio (II/I) | 1.2 | 1.2 | 1.2 | 1.1 | 1.3 | 1.2 | 1.2 | 1.0 | 1.2 | 1.2 |
| | | | Closed cell rate (%) | 98 | 99 | 98 | 98 | 98 | 98 | 98 | 98 | 98 | 98 |
| | | | Average cell diameter of cover layer ($\mu$m ) | 64 | 63 | 79 | 67 | 65 | 77 | 63 | 62 | 68 | 65 |
| | | | Average cell diameter of core layer ($\mu$m) | 20 | 18 | 20 | 30 | 24 | 30 | 19 | 18 | 20 | 16 |
| | | | High temperature peak heat quantity(J/g) | 10.5 | 14.5 | 10.3 | 12.1 | 9.3 | 10.5 | 10.3 | 9.3 | 9.1 | 9.8 |
| | Production conditions | | Molding pressure (MPa(G)) | 0.16 | 0.18 | 0.16 | 0.16 | 0.16 | 0.16 | 0.16 | 0.16 | 0.16 | 0.16 |
| | | | Fusion rate (%) | 98 | 96 | 95 | 94 | 97 | 98 | 98 | 97 | 97 | 97 |

(continued)

Table 5

| | | | Example 1 | Example 2 | Example 3 | Example 4 | Example 5 | Example 6 | Example 7 | Example 8 | Example 9 | Example 10 |
|---|---|---|---|---|---|---|---|---|---|---|---|---|
| Molded article | Physical properties | Density of expanded beads molded article k g/m³ | 30 | 60 | 20 | 30 | 30 | 30 | 30 | 30 | 30 | 30 |
| | | Shrinkage rate (%) | 2.2 | 2.0 | 2.4 | 2.2 | 2.2 | 2.2 | 2.2 | 2.2 | 2.2 | 2.2 |
| | | Secondary foaming property | good | good | good | good | good | good | good | good | good | good |
| | | Flame retardancy (UL94 HBF) | good | good | good | good | good | good | good | good | good | good |
| | | Electrostatic capacitance (pF) | 0.27 | 0.26 | 0.27 | 0.18 | 0.35 | 0.21 | 0.26 | 0.14 | 0.26 | 0.28 |
| | | Degree of contamination ΔL* | 0.4 | 0.3 | 0.9 | 0.3 | 0.7 | 0.4 | 0.4 | 0.4 | 0.4 | 0.4 |

[Table 6]

| | | | | Comparative Example 1 | Comparative Example 2 | Comparative Example 3 | Comparative Example 4 | Comparative Example 5 |
|---|---|---|---|---|---|---|---|---|
| Resin bead | Core layer | Resin | | PP1 | PP1 | PP1 | PP1 | PP1 |
| | | % by mass | | 81 | 78 | 77 | 89 | 68 |
| | | Conductive carbon material | Type | CB1 | CN1 | CN1 | - | CN1 |
| | | | % by mass (Xi) | 12 | 18 | 12 | - | 0.5 |
| | | Flame retardant | Type | FR1 | FR1 | FR1 | FR1 | FR1 |
| | | | % by mass (Yi) | 5 | 2.5 | 7.5 | 7.5 | 7.5 |
| | | Flame retardant aid | Type | ATO | ATO | ATO | ATO | ATO |
| | | | % by mass | 2.5 | 1.3 | 3.8 | 3.8 | 3.8 |
| | | Yi/Xi | - | 0.42 | 0.14 | 0.63 | - | 15.00 |
| | Cover layer | Resin | | PP1 | PP1 | - | PP1 | PP1 |
| | | % by mass | | 89 | 89 | - | 93 | 89 |
| | | Conductive carbon material | Type | - | - | - | CN1 | - |
| | | | % by mass | 0 | 0 | - | 12 | 0 |
| | | Flame retardant | Type | FR1 | FR1 | - | FR1 | FR1 |
| | | | % by mass | 7.5 | 7.5 | - | 5 | 7.5 |
| | | Flame retardant aid | Type | ATO | ATO | - | ATO | ATO |
| | | | % by mass | 3.8 | 3.8 | - | 2.5 | 3.8 |
| | Core layer/Cover | | layer (mass ratio) | 7/93 | 7/93 | - | 93/7 | 7/93 |
| | Extrusion processability | | | good | good | poor | good | good |

EP 4 311 840 B1

| | | | Comparative Example 1 | Comparative Example 2 | Comparative Example 3 | Comparative Example 4 | Comparative Example 5 |
|---|---|---|---|---|---|---|---|
| Expanded bead | Production conditions | Holding temperature (°C) | 145.5 | 145.5 | 147.0 | 145.5 | 145.5 |
| | | Holding time (min) | 15 | 15 | 15 | 15 | 15 |
| | | Pressure in sealed container (MPa (G)) | 3.2 | 3.2 | 4.0 | 3.2 | 3.2 |
| | | Expanding temperature (°C) | 145.5 | 145.5 | 147.0 | 145.5 | 145.5 |
| | Physical properties | Apparent density of expanded beads (kg/m$^3$) | 42 | 42 | 42 | 42 | 42 |
| | | Apparent density of expanded bead piece I (kg/m$^3$) | 38.7 | 38.7 | 42.2 | 42.9 | 42.0 |
| Expanded bead | | Apparent density of expanded bead piece II (kg/m$^3$) | 45.4 | 49.0 | 41.9 | 42.5 | 42.1 |
| | | Density ratio (II/I) | 1.2 | 1.3 | 1.0 | 1.0 | 1.0 |
| | | Closed cell rate (%) | 98 | 96 | 92 | 98 | 98 |
| | | Average cell diameter of cover-layer ($\mu$m) | 65 | 78 | - | 19 | 65 |
| | | Average cell diameter of core layer ($\mu$m) | 18 | 16 | 30 | 63 | 18 |
| | | High temperature peak heat quantity (J/g) | 9.1 | 8.9 | 5.2 | 14.8 | 9.3 |

EP 4 311 840 B1

21

(continued)

| | | | Comparative Example 1 | Comparative Example 2 | Comparative Example 3 | Comparative Example 4 | Comparative Example 5 |
|---|---|---|---|---|---|---|---|
| Molded article | Production conditions | Molding pressure (MPa(G)) | 0.16 | 0.16 | 0.38 | 0.24 | 0.16 |
| | Physical properties | Fusion rate (%) | 97 | 97 | 85 | 95 | 97 |
| | | Density of expanded beads molded article (kg/m$^3$) | 30 | 30 | 30 | 30 | 30 |
| | | Shrinkage rate (%) | 2.2 | 2.2 | 3.8 | 2.2 | 2.2 |
| | | Secondary foaming property | good | good | bad | good | good |
| | | Flame retardancy (UL94 HBF) | good | bad | good | bad | good |
| | | Electrostatic capacitance (pF) | 0.37 | 0.39 | > 14.3 | 12 | 0.11 |
| | | Degree of contamination A L* | 6.1 | 0.8 | 3.1 | 2.1 | 0.4 |

It is confirmed that, in each of the expanded articles in Examples 1 to 10, the core layer is highly filled with the conductive carbon material, and the cover layer is blended with the flame retardant and expanded, and therefore, secondary foaming of the expanded beads molded article during in-mold molding produces an expanded beads molded article that contains a large amount of conductive carbon material, has stable electrostatic capacitance, excellent fusibility and dimensional stability, and excellent flame retardance and contamination resistance.

On the other hand, Comparative Example 1 is an example in which carbon black is used as the conductive carbon material, which shows that the electrostatic capacitance is higher than that in the examples, desorption of the conductive carbon material is observed, and the degree of contamination is high. Comparative Example 2 is an example in which the ratio ($Y_i/X_i$) of the content ($Y_i$) of the flame retardant in the core layer to the content ($X_i$) of the conductive carbon material in the core layer is lower than the definition of the present invention, that is, the content ($Y_i$) of the flame retardant in the core layer is excessively lower than the content ($X_i$) of conductive carbon material, which shows inferior flame retardancy. Comparative Example 3 is an example of single-layered expanded beads having only the core layer, which shows a significantly inferior secondary foaming property and a high degree of contamination. Further, Comparative Example 4 is an example in which the core layer is expanded and the conductive carbon material is contained in the cover layer, which shows significantly inferior flame retardancy and a high degree of contamination. Furthermore, Comparative Example 5 is an example in which the content of the conductive carbon material in the core layer is low, which shows a significantly low electrostatic capacitance.

## Claims

1. Thermoplastic resin expanded beads comprising: a conductive carbon material; and a flame retardant, the thermoplastic resin expanded beads each comprising a cover layer in an expanded state and made of a thermoplastic resin; and a core layer made of a thermoplastic resin, a mass ratio of the cover layer to the core layer being in a range of 99: 1 to 50: 50, the conductive carbon material being one or more selected from a carbon nanotube, a carbon nanofiber, a carbon nanostructure, and graphene, a content ($X_i$) of the conductive carbon material in the core layer being 1% by mass or more and 30% by mass or less, a content ($X_o$) of the conductive carbon material in the cover layer being 3% by mass or less, 0 included, a content ($Y_o$) of the flame retardant in the cover layer being 5% by mass or more and 25% by mass or less, the content ($X_o$) of the conductive carbon material in the cover layer being lower than the content ($X_i$) of the conductive carbon material in the core layer, and a ratio ($Y_i/X_i$) of a content ($Y_i$) of the flame retardant in the core layer to the content ($X_i$) of the conductive carbon material in the core layer being 0.2 or more.

2. The thermoplastic resin expanded beads according to claim 1, wherein the content ($Y_o$) of the flame retardant in the cover layer is higher than the content ($Y_i$) of the flame retardant in the core layer.

3. The thermoplastic resin expanded beads according to claim 1 or 2, wherein the conductive carbon material is a carbon nanotube.

4. The thermoplastic resin expanded beads according to any one of claims 1 to 3, wherein an apparent density of the thermoplastic resin expanded beads is in a range of 25 kg/m$^3$ to 150 kg/m$^3$, the density being measured by the method disclosed in the description.

5. The thermoplastic resin expanded beads according to any one of claims 1 to 4, wherein a thermoplastic resin forming the core layer and a thermoplastic resin forming the cover layer are both polyolefin-based resins.

6. The thermoplastic resin expanded beads according to any one of claims 1 to 5, wherein the cover layer has an average cell diameter of 50 $\mu$m or more and 300 $\mu$m or less, the average cell diameter being measured by the method disclosed in the description.

7. The thermoplastic resin expanded beads according to any one of claims 1 to 6, wherein the core layer is a core layer in a expanded state, and the core layer has an average cell diameter of 5 $\mu$m or more and less than 50 $\mu$m, the average cell diameter being measured by the method disclosed in the description.

8. The thermoplastic resin expanded beads according to any one of claims 1 to 7, wherein a mass ratio of the cover layer to the core layer is in a range of 99:1 to 80:20.

9. A thermoplastic resin expanded beads molded article obtained by in-mold molding of the expanded beads according to any one of claims 1 to 8.

## Patentansprüche

1. Expandierte Perlen aus thermoplastischem Harz, umfassend: ein leitfähiges Kohlenstoffmaterial; und ein Flammschutzmittel,
wobei die expandierten Perlen aus thermoplastischem Harz jeweils eine Deckschicht in einem expandierten Zustand, welche aus einem thermoplastischen Harz hergestellt ist; und eine Kernschicht umfassen, welche aus einem thermoplastischen Harz hergestellt ist, wobei ein Massenverhältnis der Deckschicht zu der Kernschicht in einem Bereich von 99:1 bis 50:50 liegt, wobei das leitfähige Kohlenstoffmaterial eines oder mehrere, ausgewählt aus einer Kohlenstoffnanoröhre, einer Kohlenstoffnanofaser, einer Kohlenstoffnanostruktur und Graphen ist, wobei ein Gehalt (Xi) des leitfähigen Kohlenstoffmaterials in der Kernschicht 1 Masse-% oder mehr und 30 Masse-% oder weniger ist, wobei ein Gehalt (Xo) des leitfähigen Kohlenstoffmaterials in der Deckschicht 3 Masse-% oder weniger, 0 eingeschlossen ist, wobei ein Gehalt (Yo) des Flammschutzmittels in der Deckschicht 5 Masse-% oder mehr und 25 Masse-% oder weniger ist, wobei der Gehalt (Xo) des leitfähigen Kohlenstoffmaterials in der Deckschicht geringer ist als der Gehalt (Xi) des leitfähigen Kohlenstoffmaterials in der Kernschicht, und wobei ein Verhältnis (Yi/Xi) eines Gehalts (Yi) des Flammschutzmittels in der Kernschicht zu dem Gehalt (Xi) des leitfähigen Kohlenstoffmaterials in der Kernschicht 0,2 oder mehr ist.

2. Expandierte Perlen aus thermoplastischem Harz nach Anspruch 1, wobei der Gehalt (Yo) des Flammschutzmittels in der Deckschicht höher ist als der Gehalt (Yi) des Flammschutzmittels in der Kernschicht.

3. Expandierte Perlen aus thermoplastischem Harz nach Anspruch 1 oder 2, wobei das leitfähige Kohlenstoffmaterial eine Kohlenstoffnanoröhre ist.

4. Expandierte Perlen aus thermoplastischem Harz nach einem der Ansprüche 1 bis 3, wobei eine scheinbare Dichte der expandierten Perlen aus thermoplastischem Harz in dem Bereich von 25 kg/m³ bis 150 kg/m³ liegt, wobei die Dichte mit dem in der Beschreibung offenbarten Verfahren gemessen wurde.

5. Expandierte Perlen aus thermoplastischem Harz nach einem der Ansprüche 1 bis 4, wobei ein thermoplastisches Harz, welches die Kernschicht bildet, und ein thermoplastisches Harz, welches die Deckschicht bildet, jeweils Harze auf Polyolefinbasis sind.

6. Expandierte Perlen aus thermoplastischem Harz nach einem der Ansprüche 1 bis 5, wobei die Deckschicht einen durchschnittlichen Zelldurchmesser von 50 μm oder mehr oder 300 μm oder weniger aufweist, wobei der durchschnittliche Zelldurchmesser mit dem in der Beschreibung offenbarten Verfahren gemessen wird.

7. Expandierte Perlen aus thermoplastischem Harz nach einem der Ansprüche 1 bis 6, wobei die Kernschicht eine Kernschicht in einem expandierten Zustand ist, und die Kernschicht einen durchschnittlichen Zelldurchmesser von 5 μm oder mehr und weniger als 50 μm aufweist, wobei der durchschnittliche Zelldurchmesser mit dem in der Beschreibung offenbarten Verfahren gemessen wird.

8. Expandierte Perlen aus thermoplastischem Harz nach einem der Ansprüche 1 bis 7, wobei ein Massenverhältnis der Deckschicht zu der Kernschicht in dem Bereich von 99:1 bis 80:20 liegt.

9. Formgegenstand aus expandierten Perlen aus thermoplastischem Harz, welcher durch Formen der expandierten Perlen nach einem der Ansprüche 1 bis 8 in einer Form erhalten wird.

## Revendications

1. Billes expansées en résine thermoplastique comprenant : un matériau de carbone conducteur ; et un agent ignifuge, les billes expansées en résine thermoplastique comprenant chacune une couche de revêtement dans un état expansé et composée d'une résine thermoplastique ; et une couche de noyau composée d'une résine thermoplastique, un rapport de masse de la couche de revêtement sur la couche de noyau étant dans une plage de 99:1 à 50:50, le matériau de carbone conducteur étant un ou plusieurs éléments choisis parmi un nanotube de carbone, une nanofibre de carbone, une nanostructure de carbone et du graphène, une teneur (Xi) en matériau de carbone conducteur dans la couche de noyau étant de 1 % en masse ou plus et de 30 % en masse ou moins, une teneur (Xo) en matériau de carbone conducteur dans la couche de revêtement étant de 3 % en masse ou moins, 0 inclus, une teneur (Yo) en agent ignifuge dans la couche de revêtement étant de 5 % en masse ou plus et de 25 % en masse ou moins, la teneur (Xo) en matériau de carbone conducteur dans la couche de revêtement étant inférieure à la teneur (Xi) en matériau de carbone conducteur dans la couche de noyau, et un rapport (Yi/Xi) d'une teneur (Yi) en agent ignifuge dans la couche de noyau sur la teneur (Xi) en matériau de carbone conducteur dans la couche de noyau étant de 0,2 ou plus.

2.  Billes expansées en résine thermoplastique selon la revendication 1, dans lesquelles la teneur (Yo) en agent ignifuge dans la couche de revêtement est plus élevée que la teneur (Yi) en agent ignifuge dans la couche de noyau.

3.  Billes expansées en résine thermoplastique selon la revendication 1 ou 2, dans lesquelles le matériau de carbone conducteur est un nanotube de carbone.

4.  Billes expansées en résine thermoplastique selon l'une quelconque des revendications 1 à 3, dans lesquelles une densité apparente des billes expansées en résine thermoplastique est dans une plage de 25 kg/m$^3$ à 150 kg/m$^3$, la densité étant mesurée par le procédé divulgué dans la description.

5.  Billes expansées en résine thermoplastique selon l'une quelconque des revendications 1 à 4, dans lesquelles une résine thermoplastique qui forme la couche de noyau, et la résine thermoplastique qui forme la couche de revêtement, sont toutes deux des résines à base de polyoléfine.

6.  Billes expansées en résine thermoplastique selon l'une quelconque des revendications 1 à 5, dans lesquelles la couche de revêtement présente un diamètre cellulaire moyen de 50 $\mu$m ou plus et de 300 $\mu$m ou moins, le diamètre cellulaire moyen étant mesuré par le procédé divulgué dans la description.

7.  Billes expansées en résine thermoplastique selon l'une quelconque des revendications 1 à 6, dans lesquelles la couche de noyau est une couche de noyau dans un état expansé et la couche de noyau présente un diamètre cellulaire moyen de 5 $\mu$m ou plus et inférieur à 50 $\mu$m, le diamètre cellulaire moyen étant mesuré par le procédé divulgué dans la description.

8.  Billes expansées en résine thermoplastique selon l'une quelconque des revendications 1 à 7, dans lesquelles un rapport de masse de la couche de revêtement sur la couche de noyau se situe dans une plage de 99:1 à 80:20.

9.  Article moulé en billes expansées en résine thermoplastique obtenu par moulage dans un moule des billes expansées selon l'une quelconque des revendications 1 à 8.

# FIG.1

THERMOPLASTIC RESIN EXPANDED BEAD

COVER LAYER

CORE LAYER

A → A

# FIG.2

THERMOPLASTIC RESIN EXPANDED BEAD

CORE LAYER

COVER LAYER

A　　B　　C

**EP 4 311 840 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2016199693 A
- JP 4155899 A